# EUROPÄISCHE PATENTSCHRIFT

(11) **EP 3 282 821 B1**
(45) Veröffentlichungstag und Bekanntmachung des Hinweises auf die Patenterteilung: **12.06.2019**
(21) Anmeldenummer: 16724275.9
(22) Anmeldetag: 15.04.2016
(51) Int. Cl.: A01C 7/04

(54) **MEHRFACHVEREINZELUNGSEINRICHTUNG**
DEVICE FOR MULTIPLE SEED SINGULATION
DISPOSITIF MONOGRAINE MULTIPLE

(30) Priorität: 15.04.2015 DE 102015105769
(43) Veröffentlichungstag der Anmeldung: 21.02.2018
(73) Patentinhaber: Lemken GmbH & Co. KG, 46519 Alpen (DE)
(72) Erfinder: GEBBEKEN, Martin, 46519 Alpen (DE); BERGERFURTH, Dennis, 46459 Rees (DE); BERENDSEN, Mark, 7044 AJ Lengel (NL); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE); VAN KANN, Andreas, 53949 Dahlem (DE)
(86) Internationale Anmeldenummer: PCT/DE2016/100179
(87) Internationale Veröffentlichungsnummer: WO 2016/165696

(56) Entgegenhaltungen:
- EP-A1- 2 427 043
- WO-A1-2015/055180
- DE-A1-102006 031 272
- DE-A1-102010 015 913

## Beschreibung

Die Erfindung betrifft eine landwirtschaftliche Einzelkornsämaschine gemäß dem Oberbegriff des Patentanspruches 1.

Einzelkornsämaschinen legen Saatgut in definierten Längsabständen in Saatfurchen ab, welche quer zueinander beabstandet durch Furchenöffner in den Boden gezogen werden. Es wird zwischen mechanischer und pneumatisch über Druckdifferenz wirkender Vereinzelungstechnik - hier weiter betrachtet - unterschieden. Um die definierten Saatgutabstände zu erreichen, ist jedem Furchenöffner einzeln oder zentral eine Vereinzelungseinrichtung zugeordnet. Letztere wird beispielsweise in der deutschen Offenlegungsschrift DE 10 2010 015 913 A1 sowie der DE 10 2006 031 272 A1 dargestellt. Durch die flexible Leitungsführung von der feststehenden Vereinzelungseinrichtung zu den bodenbeweglichen Furchenöffnern kann dieses System anfällig für Ablageungenauigkeiten sein.

Alternativ kann die Vereinzelungseinrichtung, wie in EP 2 480 063 A1 gezeigt, direkt der Reiheneinheit mit Furchenöffner zugeordnet werden, was generell zu höheren Ablagegenauigkeiten führt.

Um die Vorteile einer Reihenkultur mit einer besseren Standraumverteilung der einzelnen Pflanzen zueinander zu kombinieren, werden Furchenöffner mit zugeordneten Vereinzelungseinrichtungen hintereinander und/oder nebeneinander versetzt angeordnet. Geht man von einer ursprünglichen Reihenweite von 30 Zoll (750 mm) aus, wird in der -US-Patentschrift US 7 051 663 B2 der Abstand der Saatfurchen durch die doppelte Anzahl von Vereinzelungseinrichtungen und Furchenöffnern auf 15 Zoll (375 mm) halbiert, allerdings mit erhöhtem Bauraumaufwand durch den Längsversatz der einzelnen Säaggregate.

Ausgehend vom vorgenannten Stand der Technik ist die Aufgabe der Erfindung, eine Einzelkornsämaschine bzw. eine Reiheneinheit dafür bereitzustellen, welche die jeweiligen Nachteile oben vermeidet, die Zuordnung einer Vereinzelungseinheit zu mehreren Furchenöffnern jedoch ermöglicht.

Diese Aufgabe wird durch die Merkmale des kennzeichnenden Teiles des Anspruches 1 gelöst. Durch die Aufteilung der Vereinzelungseinrichtung in eine rechte und eine linke Gehäusehälfte, welche an einem Mittelsteg befestigt sind, kann das Saatgut über die jeweiligen Auslässe den Furchenöffnern auf kurzem Wege zugeführt werden, wobei eine kompakte Gehäuseeinheit entsteht, welche einen engen Abstand zumindest zweier Furchenöffner zueinander ermöglicht.

Eine vorteilhafte Anordnung wird dadurch erreicht, indem man einer Gehäusehälfte eine Antriebseinheit, beispielsweise einen Motor, zum Drehantrieb des Vereinzelungskörpers zuordnet und auf der gegenüberliegenden Gehäuseseite eine Luftabfuhröffnung zur Erzeugung einer pneumatischen Druckdifferenz zwischen den einzelnen Bereichen des Vereinzelungskörpers zuordnet.

Ordnet man die Saatgutauslässe direkt den Gehäusehälften zu, wird eine montagefreundliche Kombination mit definierter Zuordnung der Auslässe im Zusammenspiel mit dem Vereinzelungskörper erreicht.

Durch die mittige Steganordnung kann der gesamte Aufbau der Reiheneinheit, bestehend aus Furchenöffnern und der darüber angeordneten Vereinzelungseinheit mit Auslassöffnungen symmetrisch angeordnet werden und ermöglicht einen Saatguttransport ohne seitliche Auslenkungen der Transportleitungen, was der Ablagegenauigkeit zu Gute kommt. Dabei liegen die Auslassöffnungen, Transportleitungen und die zugehörigen Furchenöffner in einer vertikalen Ebene übereinander. Die jeweiligen Ebenen liegen im mittleren Abstand der durch die Furchenöffner im Boden gezogenen Saatfurchen zueinander.

Verfügt der mittlere Steg über zumindest eine Durchbruchsöffnung, können der Vereinzelungskörper, beispielsweise in Zylinder- oder Tellerform ausgebildet, oder aber seine Antriebs- oder Lagerelemente hindurchragen und sich in die rechte und linke Gehäusehälfte erstrecken.

Versieht man das mittlere Stegelement zumindest mit einem Einlass zum Befüllen des Gehäuses mit Saatgut, kann durch die mittige Steg- und Öffnungsanordnung eine Saatgutbefüllung beider Gehäusehälften gleichzeitig erfolgen. Dabei können der Einlassöffnung Leitelemente zur Saatgutführung zugeordnet sein.

Durch Ausstattung der Gehäusehälften mit Führungs- und Klemmeinrichtungen, welche die Gehäusehälften zueinander oder gegen den Mittelsteg klemmen, wird eine montagefreundliche, jedoch wiederholbare Zuordnung der Komponenten zueinander erreicht. Die jeweiligen Kontaktflächen von Gehäuse und/oder Mittelsteg sind annähernd luftdicht zueinander ausgeführt oder über Hilfselemente abgedichtet. Hierdurch wird ein pneumatisches Druckgefälle zur Gewährleistung der Vereinzelung zwischen dem Gehäuse, dem Vereinzelungskörper und der Umgebung sicher aufrechterhalten.

Verbindet man das Gehäuse oder seine Einlassöffnung mit einem größeren Saatgutvorratsbehälter, kann für eine größere Fahrtstrecke kontinuierlich oder in Intervallen Saatgut per Schwerkraft oder über einen Luftstrom in die Vereinzelungseinrichtung nachgefüllt werden. Dabei kann der Transportluftstrom zugleich dem Aufbau eines Druckgefälles zwischen Gehäuse und Vereinzelungskörper als auch dem beschleunigten Saatgutabtransport aus den Auslassöffnungen hin zu den Furchenöffnern dienen.

Die Erfindung zeichnet sich insbesondere dadurch aus, dass eine Vereinzelungseinrichtung mit demontierbaren Gehäusehälften versehen ist, welche rechts und links von einem mittleren Stegelement angeflanscht oder angeordnet sind. Der mittlere Steg bildet dabei eine zentrale, multifunktionale Befestigungskonsole zwischen der zentralen Vereinzelungseinrichtung und dem Rahmen der Reiheneinheit, welcher die Furchenöffner führt. Hierdurch entsteht eine fixe Zuordnung der Vereinzelungseinrichtung zu mindestens zwei Furchenöffnern, wobei eine leichte, fehlerfreie Montage und Zugänglichkeit der Komponenten, insbesondere der Vereinzelungseinrichtung, erreicht wird. Durch die kompakte Anordnung wird ein maximaler Bauraum zwischen den Reiheneinheiten bzw. ein minimal möglicher Reihenabstand zweier benachbarter Furchenöffner ermöglicht. Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Der besseren Lesbarkeit der Anmeldung zugute wird der Mehrfachvereinzelungseinrichtung, wo geboten, auch nur als Vereinzelungseinrichtung bezeichnet.

Es zeigen:
Fig. 1 den prinzipiellen Aufbau einer landwirtschaftlichen Einzelkornsämaschine in perspektivischer Ansicht,
Fig. 2 eine einzelne Reiheneinheit aus Fig. 1,
Fig. 3 eine Vereinzelungseinrichtung,
Fig. 4 die Vereinzelungseinrichtung mit nur einer Gehäusehälfte und
Fig. 5 die Vereinzelungseinrichtung ohne Gehäusehälften.

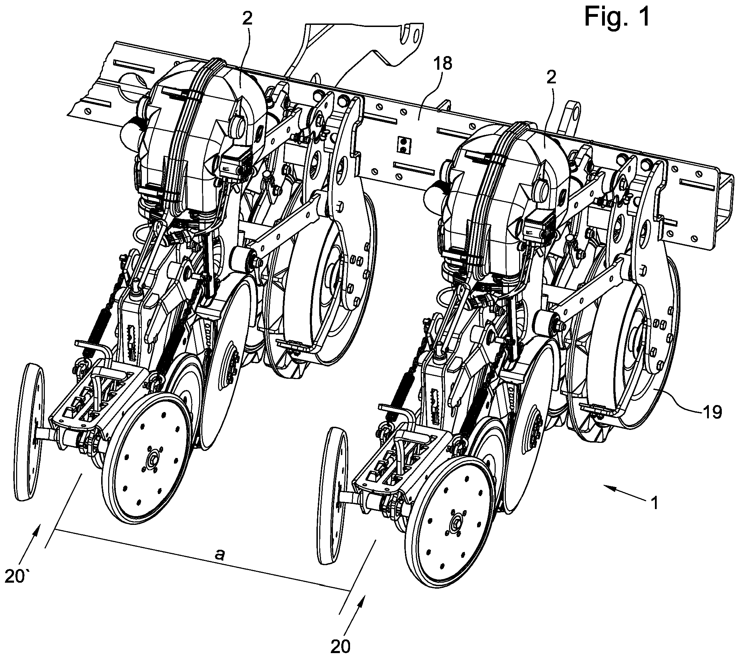

In Figur 1 sind die wesentlichen Komponenten der Einzelkornsämaschine 1 dargestellt. Am Rahmen 18, welcher sich quer zur Fahrtrichtung erstreckt und mit einer vorderen Konsole an einen Traktor oder ein Fahrgestell angebaut wird, sind seitlich mehrere Reiheneinheiten 20, 20' im seitlichen Abstand befestigt, beispielsweise in einem mittleren Abstand a von 30 Zoll oder 750 mm. Andere Reihenweiten sind möglich. Nicht dargestellt sind ein zentraler Saatguttank und ein Gebläse zur Erzeugung eines Luftstromes. Dieser Luftstrom dient zum Saatguttransport mittels Transportleitungen zwischen Saatguttank und jeweiliger Vereinzelungseinrichtung 2, aber auch zum Aufbau einer Druckdifferenz zum Betrieb der Vereinzelungseinrichtung 2. Die Einzelkornsämaschine 1 wird über Stützrollen 19 über den Boden geführt, ebenso kann sie über den Traktor oder das Fahrgestell geführt oder auch ausgehoben werden. Der Rahmen kann starr, mehrteilig und beweglich oder klappbar ausgeführt sein. Nur zwei von mehreren Reiheneinheiten 20, 20' sind dargestellt.

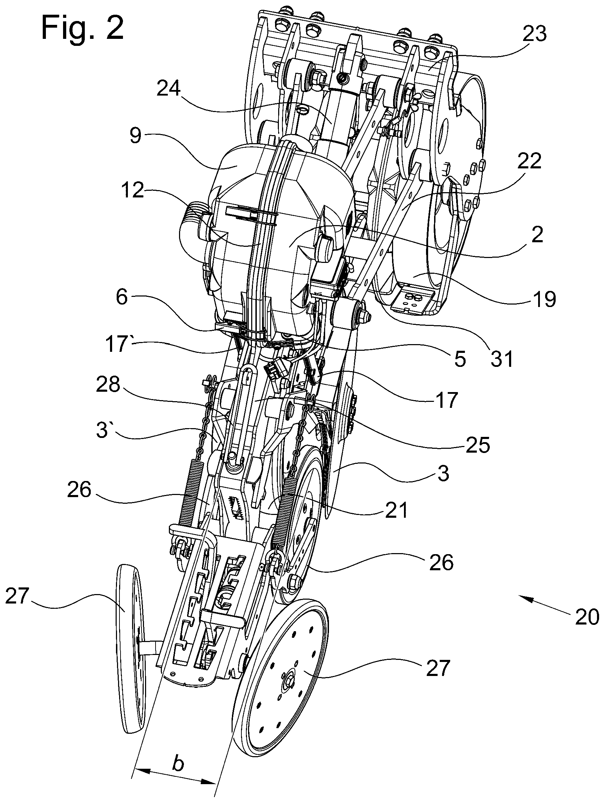

In Figur 2 ist eine einzelne Reiheneinheit 20 gezeigt. Diese wird mit einem vorderen Flansch oder Konsole 23 am Rahmen 18, wie in Fig. 1 beschrieben, befestigt. Unterhalb der Flanschfläche ist eine Stützrolle 19 drehbar gelagert. Diese ist mit zwei Rillenprofilen 31 ummantelt. Der mittlere Abstand der Rillenprofile 31 beträgt hier ca. 5 Zoll oder 125 mm und entspricht dem Abstand b der Furchenöffner 3 3', wobei die Rillenprofile 31 den Boden örtlich vorverdichten und zwei Rillen vorformen, in welche die folgenden Furchenöffner 3, 3' eine Furche schneiden und das Saatgut auf definierte Tiefe verdichten. Nicht dargestellt, kann vor bzw. hinter der Laufachse der Stützrolle 19 ein zusätzliches Düngeschar platziert werden, mit welchem ein Düngerband zur Nährstoffversorgung der Pflanzen zwischen die beiden Furchen abgelegt werden kann. Die beiden Furchenöffner 3, 3' sind als Doppelscheibenschare ausgeführt und über den Mittelrahmen 25 und eine Parallelogrammführung 22 oder eine andere geeignete Aufhängung mit der vorderen Konsole 23 im Flanschbereich der Reiheneinheit 20 verbunden. Mit einem Energiespeicher 24, hier ein Hydraulikzylinder, kann Gewicht der Einzelkornsämaschine auf die Furchenöffner übertragen werden. Ebenso können über den Energiespeicher die Furchenöffner ausgehoben oder der Anpressdruck derselben variiert werden. Mittig und im gleichen Umfangsdrehsinn zwischen den beiden Furchenöffnern 3, 3', hier Doppelscheibenschare, liegt ein Mittelrad 21 zur exakten und einstellbaren Tiefenführung der Furchenöffner 3, 3'. Hinter jeweils einem Furchenöffner 3, 3' sind ein optionales Andruckrad 26 sowie ein oder zwei Schließräder 27 zum Schließen der Saatgutfurche mit Bodenmaterial. Hier sind zwei Schließräder 27 dargestellt, welche gemeinsam die Doppelfurche hinter den Furchenziehern 3, 3' verschließen. Ebenso können zwei Paare von Rädern, weitere Andruckrollen oder Zustreichelemente angebracht werden. Aus jeweils einem Furchenöffner 3, 3' führt in einer vertikalen Ebene eine Saatgutleitung 17, 17', und zwar ebenfalls etwa im Abstand b Furchenöffner 3, 3', nach oben zur Vereinzelungseinrichtung, welches sich oberhalb der Furchenöffner 3, 3' und dem Mittelrad 21 befindet. Der Mittelrahmen 25 setzt sich in dem Mittelsteg 12 nach oben fort, welcher die beiden Gehäusehälften 13, 14 etwa mittig trennt und mit den beiden Gehäusehälften 13, 14 die äußere Begrenzung und das Gehäuse 9 der Vereinzelungseinrichtung 2 bilden. Eine Gewindespindelmit klappbarem Griff 28 dient der Höheneinstellung des Mittelrades 21 zu den Furchenöffnern 3, 3' und ist über einen hinteren Fortsatz des Mittelsteges 12 mit einem Klappstecker verdrehgesichert und arretiert.

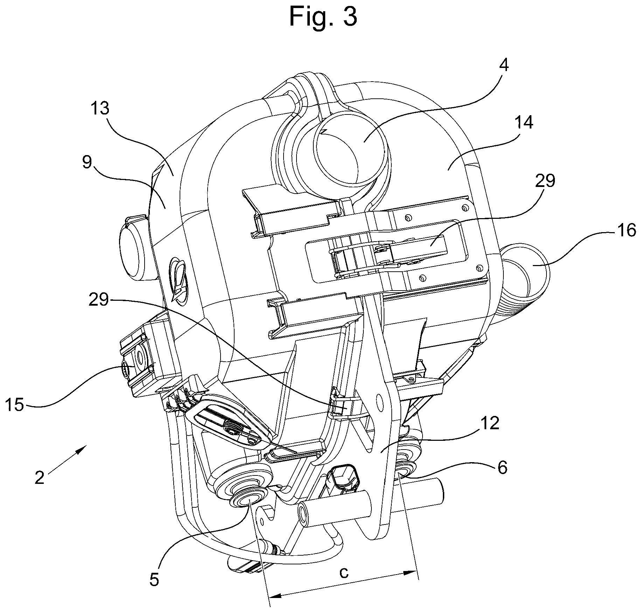

Figur 3 zeigt die Vereinzelungseinrichtung 2. Das äußere Gehäuse 9 wird aus der linken und rechten Gehäusehälfte 13, 14 mit dem innenliegenden Mittelsteg 12 gebildet. Der Mittelsteg 12 ist im unteren Bereich, wie zuvor beschrieben, auf dem Mittelrahmen 25 der Reiheneinheit 20 befestigt und trägt die gesamte Vereinzelungseinrichtung 2. An mehreren Stellen umfassen Klemmvorrichtungen 29 die beiden Gehäusehälften 13, 14 und pressen diese dicht gegen den Mittelsteg 12.

Unterhalb der Gehäusehälften 13, 14 treten die beiden Saatgutauslässe 5, 6 hervor, durch welche das vereinzelte Saatgut in die beiden unten liegenden Furchenöffner abgegeben wird. Abstand c der beiden Saatgutauslässe 5, 6 entspricht etwa Abstand b der Furchenöffner 3, 3' aus Fig. 2. Mit der Gehäusehälfte 13 ist seitlich eine Antriebseinheit 15 verbunden, welche dem Drehantrieb des hier nicht sichtbaren, innenliegenden Vereinzelungskörpers 8 dient. Im oberen, vorderen Bereich des Mittelsteges 12 tritt die Einlassöffnung 4 aus dem Gehäuse 9 hervor. Diese Einlassöffnung 4 ist hier fest mit dem Mittelsteg 12 verbunden und verbleibt an diesem beim Lösen der Gehäusehälften. Nicht dargestellt, schließt sich am Stutzen der Einlassöffnung 4 eine Schlauchleitung an, welche die Vereinzelungseinrichtung 2 mit dem Vorratstank und dem Gebläse zum Aufbau einer Druckdifferenz und zum Nachschub von Saatgut verbindet, wie weiter oben ausgeführt.

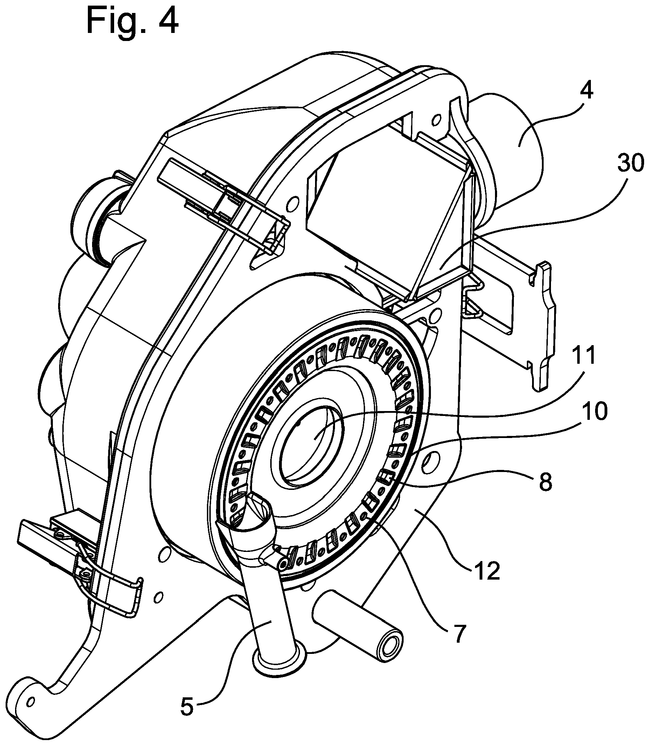

Figur 4 zeigt das halb geöffnete Gehäuse ohne die Gehäusehälfte 13 und Antriebseinheit 15 aus vorheriger Figur 3. Durch den Einlass 4 wird Saatgut mit einem Luftstrom in das Gehäuse geblasen, bis sich ein Füllstand bis max. zur unteren Hälfte des Vereinzelungskörpers 8 bildet. Der Füllstand kann durch eine Einrichtung überwacht und geregelt werden. Der Vereinzelungskörper 8 ist als rotierender Hohlkörper mit einer Innenseite 11 und einer Außenseite 10 gebildet. Eine Leiteinrichtung 30 teilt den Saatgutstrom aus der Einlassöffnung 4 zwischen den beiden Gehäusehälften 13, 14 auf. Mit der durch den Luftstrom aus Einlassöffnung 4 aufgebauten Druckdifferenz zwischen der Außenseite 10 des Vereinzelungskörpers und seiner Innenseite 11 lagern sich Saatgutkörner an die Ausnehmungen 7 an. Durch die Rotation des Vereinzelungskörpers 8 entgegen dem Uhrzeigersinn werden die angelagerten Saatgutkörner aus dem unteren Füllstand einzeln bis zum hinteren Saatgutauslass 5, 6 gefördert, wo sie durch eine Unterbrechung der Druckdifferenz, z.B. durch eine Blende oder Rad auf der Innenseite 11 des Vereinzelungskörpers, von diesem abgelöst werden und durch den in die Auslassöffnung 5, 6 fortgesetzten Luftstrom nach unten in den Furchenöffner 3, 3' geblasen werden.

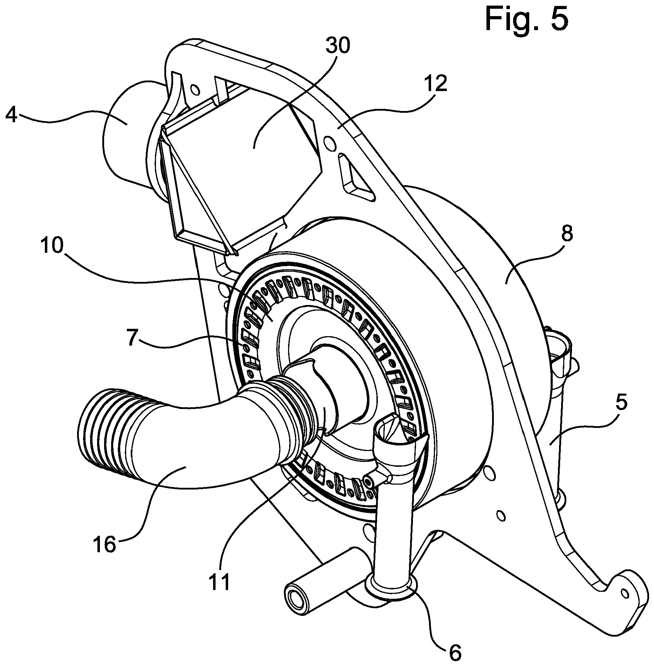

Figur 5 ist auch um die zweite Gehäusehälfte freigestellt und zeigt die Vereinzelungssituation, wie schon unter Figur 4 beschrieben. Verblieben sind der Vereinzelungskörper 8, die Einlassöffnung 4 mit Leitelement 30, die Saatgutauslässe 5 und 6 sowie die Luftabfuhröffnung 16, welche den atmosphärischen Druckausgleich zwischen der Innenseite 11 des Vereinzelungskörpers durch die nicht dargestellte Gehäusehälfte ins Freie schafft. Im Übergang des Vereinzelungskörpers 8 zur Luftabfuhröffnung 16 ist eine Drehdurchführung angeordnet, da der Vereinzelungskörper 8 rotiert, die Luftabfuhröffnung 16 jedoch gehäusefest fixiert ist. Die Ausnehmungen 7 des Vereinzelungskörpers 8 sind gleichmäßig auf dem durch sie gebildeten Teilkreis angeordnet, wobei die gegenüberliegenden Ausnehmungen 7 aus Figur 4 um einen halben Schrittwinkel versetzt angeordnet sind. Hierdurch wird abwechselnd jeweils ein Saatkorn in den rechten und linken Saatgutauslass abgegeben, wodurch die Saatkörner in den seitlich benachbarten Saatfurchen abwechselnd um den halben Kornabstand längs zueinander abgelegt werden, was die Standraumverteilung zueinander optimiert.

**BEZUGSZEICHENLISTE**

| | |
|---|---|
| 1 | Einzelkornsämaschine |
| 2 | (Mehrfach-)Vereinzelungseinrichtung |
| 3 | Furchenöffner |
| 4 | Einlassöffnung |
| 5 | Saatgutauslass |
| 6 | Saatgutauslass |
| 7 | Ausnehmung |
| 8 | Vereinzelungskörper |
| 9 | Gehäuse |
| 10 | Außenseite |
| 11 | Innenseite |
| 12 | Stegelement |
| 13 | Gehäusehälfte |
| 14 | Gehäusehälfte |
| 15 | Antriebseinheit |
| 16 | Luftabführöffnung |
| 17 | Saatgutleitung |
| 18 | Rahmen |
| 19 | Stützrolle |
| 20 | Reiheneinheit |
| 21 | Mittelrad |
| 22 | Aufhängung |
| 23 | Konsole |
| 24 | Energiespeicher |
| 25 | Mittelrahmen |
| 26 | Andruckrad |
| 27 | Schließrad |
| 28 | Spindel |
| 29 | Klemmvorrichtung |
| 30 | Leitelement |
| 31 | Rillenprofil |

## Patentansprüche

1. Mehrfachvereinzelungseinrichtung (2) einer landwirtschaftlichen Einzelkornsämaschine (1), wobei die Einzelkornsämaschine (1) mehrere Furchenöffner (3) zur Ablage von durch die Mehrfachvereinzelungseinrichtung (2) vereinzeltem Saatgut in den Boden aufweist, wobei die Mehrfachvereinzelungseinrichtung (2) neben einer Einlassöffnung (4) zumindest zwei Saatgutauslässe (5), (6) aufweist, welche vereinzeltes Saatgut jeweils in einen Furchenöffner (3) leiten, wobei die Mehrfachvereinzelungseinrichtung (2) zumindest einen rotierend angetriebenen, in seinem äußeren Bereich mit regelmäßig angeordneten Ausnehmungen (7) versehenen Vereinzelungskörper (8) aufweist, wobei der zumindest eine Vereinzelungskörper (8) ein den Vereinzelungskörper umgebendes Gehäuse (9) zur Aufnahme eines Saatgutvorrates aufweist, wobei der Saatgutvorrat den Vereinzelungskörper (8) auf einer ersten Seite (10) in seinem unteren Bereich umgibt, wobei mittels eines pneumatischen Druckgefälles, welches zwischen der ersten Seite (10) und der zweiten Seite (11) des Vereinzelungskörpers (8) herrscht, einzelnes Saatgut auf der ersten Seite (10) des Vereinzelungskörper an seine Ausnehmungen angelagert wird und außerhalb des Saatgutvorrates durch Unterbrechen des Druckgefälles in einen Saatgutauslass (5), (6) abgegeben wird,
**dadurch gekennzeichnet,**
**dass** das den Vereinzelungskörper (8) umgebende Gehäuse (9) mehrteilig ausgeführt ist, nämlich in ein mittleres, das Gehäuse tragendes Stegelement (12) und zumindest einer jeweils rechts und links vom Steg angeordneten Gehäusehälfte (13), (14).

2. Mehrfachvereinzelungseinrichtung nach Anspruch 1,
**dadurch gekennzeichnet,**
**dass** eine Gehäusehälfte (13) eine Antriebseinheit (15) für den rotierenden Vereinzelungskörper (8) und eine weitere Gehäusehälfte (14) eine Luftabfuhröffnung (16) zur Erzeugung des Druckgefälles im Gehäuse (9) aufweisen.

3. Mehrfachvereinzelungseinrichtung nach Anspruch 1 oder 2,
**dadurch gekennzeichnet,**
**dass** jeweils eine Gehäusehälfte (13), (14) zumindest einen Saatgutauslass (5), (6) aufweist, welcher mit einem Furchenöffner (3) zur Saatgutablage in Verbindung steht.

4. Mehrfachvereinzelungseinrichtung nach einem der vorstehenden Ansprüche,
**dadurch gekennzeichnet,**
**dass** das mittlere Stegelement (12) annähernd mittig oberhalb zumindest zweier zueinander beanstandeter Furchenöffner (3) angeordnet ist, wobei der Abstand der jeweiligen Saatgutauslässe (5), (6) zueinander, seitlich zum mittleren Stegelement 12 gemessen, der Reihenweite bzw. dem Furchenabstand der durch die Furchenöffner (3) in den Boden gezogenen Furchen annähernd entspricht.

5. Mehrfachvereinzelungseinrichtung nach einem der vorstehenden Ansprüche,
**dadurch gekennzeichnet,**
**dass** das mittlere Stegelement (12) zumindest einen Durchbruch aufweist, durch welchen der Vereinzelungskörper (8) oder seine Antriebs- oder Lagerwelle hindurchragt.

6. Mehrfachvereinzelungseinrichtung nach einem der vorstehenden Ansprüche,
**dadurch gekennzeichnet,**
**dass** das mittlere Stegelement (12) zumindest einen Einlass (4) zum Befüllen des Gehäuses (9) mit Saatgut aufweist.

7. Mehrfachvereinzelungseinrichtung nach einem der vorstehenden Ansprüche,
**dadurch gekennzeichnet,**
**dass** das Gehäuse (9) Führungs- und Klemmeinrichtungen (29) aufweist, welche seitlich zum mittleren Stegelement (12) wirkend angeordnet sind und eine form- und/oder kraftschlüssige Fixierung der Gehäusehälften (13,14) zum mittleren Stegelement (12) sichern

8. Mehrfachvereinzelungseinrichtung nach einem der vorstehenden Ansprüche,
**dadurch gekennzeichnet,**
**dass** dem Gehäuse (9) oder seiner Einlassöffnung (4) ein Saatgutvorratsbehälter zugeordnet ist.

## Claims

1. Multiple separation device (2) of an agricultural precision seed drill (1), the precision seed drill (1) having a plurality of furrow openers (3) for depositing singled seed into the soil by the multiple separation device (2), the multiple separation device (2) having at least two seed outlets (5), (6) in addition to an inlet opening (4), which guide separated seed into each furrow opener (3), the multiple separation device (2) having at least one separation body (8) which is driven in rotation and provided in its outer region with regularly arranged recesses (7), the at least one separation body (8) having a housing (9) surrounding the separation body for receiving a seed supply, the seed supply surrounding the separation body (8) on a first side (10) in its lower region, wherein by means of a pneumatic pressure drop, which prevails between the first side (10) and the second side (11) of the separation body (8), individual seed is attached to its recesses on the first side (10) of the separation body and is discharged outside the seed supply into a seed outlet (5), (6) by interrupting the pressure drop,
**characterized in that**
the housing (9) surrounding the separation body (8) is designed in several parts, namely in a central web element (12) carrying the housing and at least one each to the right and left of the web arranged housing half (13), (14).

2. Multiple separation device according to claim 1,
**characterized in that**
one housing half (13) has a drive unit (15) for the rotating separation body (8) and a further housing half (14) has an air discharge opening (16) for generating the pressure drop in the housing (9).

3. Multiple separation device according to claim 1 or 2,
**characterized in that**
in each case a housing half (13), (14) has at least one seed outlet (5), (6) which is connected to a furrow opener (3) for seed placement.

4. Multiple separation device according to one of the above claims,
**characterized in that**
the central web element (12) is arranged approximately centrally above at least two mutually spaced furrow openers (3), the spacing of the respective seed outlets (5), (6) from one another, measured laterally to the central web element (12), approximately corresponding to the row width or the furrow spacing of the furrows drawn into the ground by the furrow openers (3).

5. Multiple separation device in accordance with one of the above requirements,
**characterized in that**
the central web element (12) has at least one opening through which the separation body (8) or its drive or bearing shaft projects.

6. Multiple separation device according to one of the above claims,
**characterized in that**
the central web element (12) has at least one inlet opening (4) for filling the housing (9) with seed.

7. Multiple separation device according to one of the above claims,
**characterized in that**
the housing (9) has guide and clamping devices (29) which are arranged laterally acting with respect to the central web element (12) and secure a positive and/or non-positive fixing of the housing halves (13, 14) with respect to the central web element (12)

8. Multiple separation device according to one of the above claims,
**characterized in that**
a seed hopper is assigned to the housing (9) or its inlet opening (4).

## Revendications

1. Dispositif de séparation multiple (2) d'un semoir pneumatique de précision agricole (1), le semoir pneumatique de précision (1) ayant une pluralité d'ouvreurs de sillons (3) pour déposer la semence enfoncée dans le sol par le dispositif de sélection multiple (2), le dispositif de séparation multiple (2) ayant au moins deux sorties de semences (5), (6) en plus d'une entrée (4), qui guide la semence séparée dans un ouvreur de sillon (3), le dispositif de séparation multiple (2) présentant au moins un corps de sélection (8) entraîné en rotation et pourvu dans sa zone extérieure d'évidements (7) disposés régulièrement, le au moins un corps de sélection (8) ayant un boîtier (9) entourant le corps de sélection pour recevoir une alimentation en graines, l'alimentation en graines entourant le corps de sélection (8) sur un premier côté (10) dans sa région inférieure, dans lequel au moyen d'un gradient de pression pneumatique, qui prévaut entre le premier côté (10) et le deuxième côté (11) du corps de sélection (8), de la semence individuelle est fixée à ses évidements sur le premier côté (10) du corps de sélection et est déchargée à l'extérieur de l'alimentation en semence dans une sortie (5), (6) en interrompant le gradient de pression,
**caractérisé en ce que**
le boîtier (9) entourant le corps de sélection (8) est réalisé en plusieurs parties, à savoir dans un élément central d'âme (12) portant le boîtier et au moins une moitié de boîtier (13), (14) disposée respectivement à droite et à gauche de l'âme.

2. Dispositif de séparation multiple selon la revendication 1,
**caractérisé en ce**
**qu'**une moitié de boîtier (13) présente une unité d'entraînement (15) pour le corps de sélection rotatif (8) et une autre moitié de boîtier (14) présente une ouverture de décharge d'air (16) pour générer la gradient de pression dans le boîtier (9).

3. Dispositif de séparation multiple selon la revendication 1 ou 2,
**caractérisé en ce**
**qu'**une moitié de boîtier (13), (14) comporte au moins une sortie de semence (5), (6) qui est reliée à un ouvreur de sillon (3) pour le placement de semence.

4. Dispositif de sélection multiple selon l'une des revendications ci-dessus,
**caractérisé en ce que**
l'élément central d'âme (12) est disposé approximativement au centre au-dessus d'au moins deux dispositifs d'ouvreur de sillon (3) espacés l'un de l'autre, l'écart entre les sorties de semence (5), (6) respectives, mesuré latéralement à l'élément central d'âme (12), correspondant approximativement à la largeur de rangée ou l'écart des sillons tirés dans le sol par les dispositifs d'ouvreur de sillon (3), étant de l'ordre de la largeur des rangées.

5. Dispositif de sélection multiple selon l'une des revendications ci-dessus,
**caractérisé en ce que**
l'élément central d'âme (12) présente au moins une ouverture par laquelle le corps sélection (8) ou son arbre d'entraînement ou de boîte se traverse.

6. Dispositif de sélection multiple selon l'une des revendications ci-dessus,
**caractérisé en ce que**
l'élément central d'âme (12) présente au moins une entrée (4) pour remplir le boîtier (9) de semences.

7. Dispositif de sélection multiple selon l'une des revendications ci-dessus,
**caractérisé en ce que**
le boîtier (9) comporte des dispositifs de guidage et de serrage (29) qui sont disposés latéralement par rapport à l'élément central d'âme (12) et assurent une fixation positive et/ou non positive des moitiés de boîtier (13, 14) par rapport à l'élément central d'âme (12)

8. Dispositif de sélection multiple selon l'une des revendications ci-dessus,
**caractérisé en ce**
**qu'**une trémie de semences est affectée au boîtier (9) ou à son ouverture d'entrée (4).
